(19) Europäisches Patentamt
European Patent Office
Office européen des brevets

(11) EP 4 592 894 A1

(12) EUROPEAN PATENT APPLICATION

(43) Date of publication:
30.07.2025 Bulletin 2025/31

(51) International Patent Classification (IPC):
G06N 3/045 (2023.01)    G06N 3/096 (2023.01)
G06N 3/0455 (2023.01)

(21) Application number: 24154149.9

(22) Date of filing: 26.01.2024

(52) Cooperative Patent Classification (CPC):
G06N 3/096; G06N 3/045; G06N 3/0455;
G06N 3/0895

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Healthineers AG
91301 Forchheim (DE)

(72) Inventors:
• Kollerathu, Varghese
560066 Whitefield, Bengalurur (IN)
• Vinay Bhombore, Vineet
560078 Bengaluru (IN)
• Wolf, Matthias
Coatesville, 19320 (US)

(74) Representative: Siemens Healthineers
Patent Attorneys
Postfach 22 16 34
80506 München (DE)

(54) **METHOD AND SYSTEM FOR PROVIDING A SECOND NEURAL NETWORK**

(57)     The invention relates to providing a second neural network. It is based on receiving a first neural network trained to map first input data to first output data, and on receiving the second neural network configured to map second input data to second output data. The second input data has the same structure as the first input data. It is furthermore based on determining a joint neural network comprising a first part of the first neural network and a second part of the second neural network. It is furthermore based on receiving first training data and second training data. It is furthermore based on training the joint neural network based on the first training data, and on training the second neural network based on the second training data and a layer loss function. The layer loss function is based on a comparison of values of a second layer of the second part in the second neural network and values of a corresponding layer in the trained joint neural network. Furthermore, it is based on providing the second neural network.

FIG 4

**Description**

The present invention pertains to the domain of artificial intelligence (an acronym is "AI"), in particular, to a method for facilitating knowledge transfer from one AI model to another. This is particularly relevant in scenarios where the models have significantly different architectures and the original training data is restricted or unavailable due to technical constraints.

In the dynamic field of AI, the development and training of advanced models are essential for ongoing progress. The data used to train these AI models is a critical factor in enhancing their performance. However, access to such data can often be restricted due to a variety of technical factors. These include stringent data privacy regulations that prevent the sharing of sensitive information, routine data purging practices at data sources like hospitals that erase historical data, and the use of decentralized training methods across multiple sites that limit centralized data access.

The challenge this invention addresses is the transfer of knowledge from an established first neural network, trained in a decentralized environment or where access to training data is no longer available due to these technical constraints, to a new second neural network that has a different architecture from the first neural network.

The current approach, which involves directly using the data the first neural network was trained on, presents several limitations. Firstly, it is not feasible due to the technical constraints posed by data privacy regulations and the routine purging of data at source locations. Secondly, it lacks scalability as it is time-consuming and technically challenging to gather data from multiple sites spread across various geographical locations. Moreover, data privacy regulations often prevent the sharing of data, further complicating the process. Lastly, it is not cost-effective. A model trained in a decentralized manner over several years may have been trained on a large number of data points. Managing and storing these datasets at a central location can be prohibitively expensive, especially if the model was trained on a private dataset with limited access.

The underlying problem of the invention is transferring knowledge from a first neural network to a second neural network without having access to the complete training data of the first neural network, overcoming the technical challenges associated with data access, privacy, and differences in model architecture. By solving this problem, the invention might have the potential to significantly transform the way AI models learn and evolve, especially in decentralized environments where data privacy and access are critical considerations.

The problem is solved according to the independent claims. Further advantageous embodiments and additional advantageous features are described in the dependent claims and in the specification.

In the following, the solution according to the invention is described with respect to the claimed systems as well as with respect to the claimed methods. Features, advantages or alternative embodiments herein can be assigned to the other corresponding claimed objects and vice versa. In other words, the systems can be improved with features described or claimed in the context of the corresponding method. In this case, the functional features of the methods are embodied by objective units of the systems.

Furthermore, in the following the solution according to the invention is described with respect to methods and systems for providing a second neural network as well as with respect to methods and systems for using such a second neural network. Features, advantages or alternative embodiments herein can be assigned to the other claimed objects and vice versa. In other words, claims and embodiments for providing the second neural network can be improved with features described or claimed in the context of using the second neural network.

In the following, the term "in particular" is used to indicate an optional and/or advantageous additional feature. Furthermore, the terms "applying a neural network to data" or "applying a unit to data" is used to indicate that the respective data is used as input data for the model or the unit, or that input data is used that comprises the respective data (and potentially other data).

The invention relates in a first aspect to a computer-implemented method for providing a second neural network. The method is based on receiving a first neural network trained to map first input data to first output data, and on receiving the second neural network configured to map second input data to second output data. The second input data has the same structure as the first input data. The method is furthermore based on determining a joint neural network comprising a first part of the first neural network and a second part of the second neural network. The method is furthermore based on receiving first training data and second training data. The method is furthermore based on training the joint neural network based on the first training data, and on training the second neural network based on the second training data and a layer loss function. The layer loss function is based on a comparison of values of a second layer of the second part in the second neural network and values of a corresponding layer in the trained joint neural network. Furthermore, the method is based on providing the second neural network.

In an alternative formulation, according to this aspect the invention relates to a computer-implemented method for providing a second neural network. The method is based on receiving a first neural network and on receiving the second neural network, wherein the input layer of the first neural network has the same size as the input layer of the second neural network. The method is furthermore based on determining a joint neural network comprising a first part of the first neural network and a second part of the second neural network. The method is furthermore based on receiving first training data and second training data. The method is furthermore based on training the joint neural network based on the first training data, and on training the second neural network based on the second training data and a layer loss function. The layer loss function is based on a comparison of values of a second layer of the second part in the second neural network and values of a corresponding layer in the trained joint neural network. Furthermore, the method is based on providing the second neural network.

In particular, the steps of receiving the first neural network and the second neural network, as well as the step of receiving the first training data and second training data are executed by an input unit or an interface, in particular, by an input unit or an interface of a providing system. In particular, the steps of determining the joint neural network as well as training the joint neural network and the second neural network are executed by a computation unit, in particular, by a computation unit of the providing system. In particular, the step of providing the second neural network is executed by an output unit or the interface, in particular, by an input unit or the interface of the providing system.

In particular, a neural network is a certain type of machine learning model. In particular, a machine learning model is a computational model that improves its performance at a task over time through exposure to data. This model can be a set of instructions or algorithms that generate a specific output from input data. More specifically, the machine learning model could be a supervised model, where the model is trained on a dataset with known outputs, or an unsupervised model, where the model identifies patterns in a dataset without known outputs.

In particular, a neural network may comprise nodes or layers of nodes (in this context, a synonym for "node" is "unit" or "processing element") that are connected by edges, wherein weights are assigned to these edges. In particular, a neural network can be a deep neural network, a convolutional neural network, a convolutional deep neural network or a transformer network. Furthermore, a neural network can be an adversarial network, a deep adversarial network and/or a generative adversarial network.

In particular, the first input data and the second input data have the same structure implies that the first input data and the second input data have the same format, organization and/or representation.

In particular, if the first input data can be represented as a numerical vector or matrix, the second input data is a numerical vector or matrix of the same dimension. In particular, if the first input data is an image, the second input data is an image of the same dimension and the same size with respect to every dimension (measured in pixel or voxels).

In particular, the first neural network and the second neural network are configured to work on first input data and second input data having the same structure if the input layer of the first neural network and the input layer of the second neural network have the same size. In particular, the input layer of the first neural network and the input layer of the second neural network have the same size if the number of nodes within the input layer of the first neural network equals the number of nodes within the input layer of the second neural network.

Preferably, the first training data has the same structure as the first input data. Preferably, the second training data comprises data having the same structure as the second input data.

In particular, the first training data can comprise training data that has previously been used for training the first neural network. In particular, the first training data can be a subset of the training data used for training the first neural network. However, the first training data can also be independent of the training data that has previously been used for training the first neural network.

In particular, the second training data can comprise training data that has previously been used for training the first neural network. In particular, the second training data can be a subset of the training data used for training the first neural network. However, the second training data can also be independent of the training data that has previously been used for training the first neural network.

The joint neural network comprises a first part of the first neural network and a second part of the second neural network. In particular, a part of a neural network comprises layers of the neural network. Furthermore, a part of a neural network can comprise edges between nodes in the layers. In particular, a part of a neural network comprises a plurality of subsequent layers of a neural network, and all of the edges between the respective layers of the neural network.

In particular, the joint neural network is constructed to comprise a first part of the first neural network and a second part of the second neural network. This implies that weights of the edges within the joint neural network correspond to weights of the edges in the first part of the first neural network and the second part of the second neural network at the time of construction of the joint neural network. However, if subsequently there is a training of the joint neural network these weights of the edges can change based on the training of the neural network.

In particular, the joint neural network can be a foundation neural network. In particular, a foundation neural network is trained on a vast quantity of data at scale (in particular, by self-supervised learning or semi-supervised learning) such that it can be adapted to a wide range of downstream tasks.

In general, parameters of a machine learning model (in particular, of a neural network) can be adapted by means of training. In the process of training, the value of the weights associated to the edges is changed. In particular, supervised training, semi-supervised training, unsupervised training, reinforcement learning and/or active learning can be used. Furthermore, representation learning (an alternative term is "feature learning") can be used. In particular, the parameters of the machine learning models can be adapted iteratively by several steps of training. In particular, within the training a certain cost function can be minimized. In particular, within the training of a neural network the backpropagation algorithm can be used.

In particular, a loss function is an operation that quantifies the difference between the predicted output and the actual output in a machine learning model or a neural network. Here, the predicted and the actual output of the neural network can also correspond to quantities that can be derived from parts of the neural network that do not correspond to the output layer of the neural network. The loss function can be used during the training of a neural network to adjust the weights and biases of the network. In particular, the goal of this adjustment process is to minimize the value of the loss function, thereby reducing the difference between the predicted and actual outputs and improving the performance of the model or neural network.

The inventors recognized that by using the first part of the first neural network in the joint neural network, the data incorporated into the first neural network by training can be transferred to the joint neural network. Furthermore, the training of the joint neural network can be executed in a self-supervised fashion, so that it is not necessary to acquire ground truth for the training data and there is a larger amount of available training data. Based on the usage of the layer loss function, the data incorporated in the joint network can be utilized in the training of the second neural network. This finally implies that for training the second neural network less training data is necessary compared to a training from scratch. In particular, in cases where not all training data of the first neural network is accessible anymore, using the proposed method the not available training data can still positively influence the training and the performance of the second neural network.

According to a further possible aspect the first part comprises a first layer of the first neural network and/or the second part comprises a second layer of the second neural network. According to a further possible aspect the first part comprises plurality of first layers of the first neural network and/or the second part comprises a plurality of second layer of the second neural network. The inventors recognized that by using a first part and/or a second part comprising full layers it can be exploited that that information in connected and corresponding parts of the neural networks is more relevant for the training of the second neural network.

According to a further aspect the second part comprises a plurality of consecutive second layers of the second neural network. According to a further possible aspect the first part comprises a plurality of consecutive first layers of the first neural network. The inventors recognized that by using a first part and/or a second part comprising full layers it can be exploited that that information in connected and corresponding parts of the neural networks is more relevant for the training of the second neural network.

According to a further aspect the joint neural network comprises a mirrored second part being a mirrored version of the second part, wherein the last layer of the second part and the first layer of the mirrored second part are identical.

In general, a mirrored part being a mirrored version of an original part of a neural network may be understood to refer to an object that has a structure and configuration that is a reflection or inverse of the original part of the neural network. This mirrored part may have the same number of layers as the original part, but the order of the layers may be reversed. For example, if the original part consists of three consecutive layers in the order "layer A", "layer B" and "layer C", the mirrored part may consist of the same series of hidden layers in reverse order, i.e., three consecutive layers in the order "layer C", "layer B" and "layer A". In particular, the edges or weights of the original part can also be mirrored or inversed to determine the edges and weights of the mirrored part. In particular, if there is an edge between a first node of a first layer and a second node in the second layer of the original part, there is also a connection between the corresponding nodes and the corresponding layers of the mirrored part. The weights of the edges could be initialized randomly or calculated from the weights of the original part.

The inventor recognized that by using a mirrored second part within the joint neural network it is better suited for being trained in a self-supervised way.

According to a further aspect the first part comprises a plurality of consecutive first layers of the first neural network and the joint neural network comprises a mirrored first part being a mirrored version of the first part. Furthermore, in the joint neural network the first part is arranged before the second part and the mirrored first part is arranged after the mirrored second part.

In particular, a first part of a neural network being arranged before a second part of a neural network means that the first part of the neural network is located nearer to the input layer of the neural network (and farer away from the output layer of the neural network) than the second part. Vice versa, a first part of a neural network being arranged after a second part of a neural network means that the first part of the neural network is located farer away from the input layer of the neural network (and nearer to the output layer of the neural network) than the second part.

The inventors recognized that by the joint neural network comprising the first and the second part as well as the mirrored first and the mirrored second part in the explained order it is possible to have a very efficient training of the joint neural network.

According to a further possible aspect the joint neural network does not comprise an additional layer between the first part and the second part, and the joint neural network does not comprise an additional layer between the mirrored second part and the mirrored first part.

The inventors recognized that by not using additional layers between the first part and the second part and between the mirrored second part and the first part the number of additional weights that need to be adapted during training is minimal, improving the efficiency of the training of the joint neural network.

According to a further aspect the layer loss function is based on cosine similarity, L1 loss and/or L2 loss of the second layer of the second part in the second neural network and the corresponding layer in the trained joint neural network.

In particular, the values of the second layer of the second part in the second neural network used corresponds to the set of values of the nodes of the second layer when the second neural network is applied to a certain element of training data. In particular, the values of the corresponding layer within the joint neural network corresponds to the values of the nodes of this layer when the joint neural network is applied to corresponding training data.

In particular, the values of the nodes of a layer can be arranged as a vector for calculating the loss function. In particular, it is possible to not use all of the nodes in the respective layers for constructing the vector to calculate the loss function. In particular, it would be possible to use corresponding subsets (comprising at least one node) of the nodes in the respective layers.

In particular, a cosine similarity may be understood to refer to a measure of similarity between two non-zero vectors of an inner product space, wherein the first vector corresponds to the values of the second layer within the second part in the second neural network, and the second vector corresponds to the values of the corresponding layer in the trained joint neural network. This measure is calculated by dividing the dot product of the two vectors by the product of the magnitudes of the vectors.

In particular, a L1 loss is a type of loss function that calculates the absolute differences between the true values and the predicted values. If the true values and the predicted values correspond to vectors, the loss function can be calculated by adding the element-wise absolute difference. The term "Least Absolute Deviations" can be used as a synonym for the term "L1 loss".

In particular, a L2 loss is a type of loss function that calculates the square of the differences between the true values and the predicted values. If the true values and the predicted values correspond to vectors, the loss function can be calculated by adding the element-wise square of the differences. The term " Least Squares Error" can be used as a synonym for the term "L2 loss".

The inventors recognized that using the cosine similarity, the L1 loss and/or the L2 loss is a very efficient way to minimize differences between a first vector and a second vector in a loss function, and creates a very efficient training process.

According to a further aspect the second training data comprises training input data and associated training reference data, wherein the second loss function comprises an output loss function based on the comparison of the result of applying the second neural network to the training input data and the associated training reference data. In particular, the second training data can comprise a plurality of pairs, each pair comprising training input data and associated training reference data. In particular, the second loss function is chosen to minimize differences between the result of applying the second neural network to the training input data and the associated training reference data. In particular, the second loss function can correspond to a cosine-similarity, to an L1 loss, to an L2 loss and/or to a cross-entropy.

Preferably, the training input data has the same structure as the second input data.

The inventors recognized that based on the proposed output loss function it is possible to train the second neural network to reproduce the relationship between the training input data and the associated training reference data.

According to a further aspect of the invention the joint neural network comprises an input layer and an output layer, wherein the input layer of the joint neural network and the output layer of the joint neural network have equal size.

The inventors recognized that by having input and output layer of the same size the joint neural network has an autoencoder structure that can be trained unsupervised without creating a specific ground truth.

According to a further aspect training the joint neural network is based on the difference of input data of the joint neural network and the output of the joint neural network when applied to the input data, wherein the input data is based on the first training data. In particular, the input data can be identical to the first training data.

The inventors recognized that by having a training based on the difference of input data and the corresponding output data, the joint neural network has an autoencoder structure that can be trained unsupervised without creating a specific ground truth.

According to a further aspect of the invention training the joint neural network comprises a sub-step of preprocessing the first training data with a preprocessing part of the first neural network, and a sub-step of applying the joint neural network to input data comprising the preprocessed first training data.

In particular, the preprocessing part comprises at least one layer of the first neural network. In particular, the preprocessing part can comprise at least two consecutive layers of the first neural network. In particular, the preprocessing part can comprise the input layer of the first neural network.

The inventors recognized that by preprocessing the first training data with a preprocessing part the structure of the joint neural network can be chosen more flexible and/or it is not necessary to use other methods of preprocessing the data if the joint neural network shall work with input data having a different structure than the input data of the first neural network.

According to a further aspect of the invention the preprocessing part and the first part consist of consecutive first layers of the first neural network, wherein the last layer of the preprocessing part is the first layer of the first part. In particular, the last layer of the preprocessing part within the first neural network is the first layer of the first part within the first neural network.

The inventors recognized that by using a preprocessing part and a first part that overlaps no additional transformation of data is necessary, due to the fact that the structure of the output data of the preprocessing parts equals the structure of the input data of the first part and/or the input data of the joint neural network.

According to a further aspect of the invention the method furthermore comprises augmenting the first training data and/or the second training data.

In particular, augmenting training data corresponds to the process of artificially expanding or enhancing the training data to improve the performance of a machine learning model and, in particular, a neural network. This process may involve creating new data points based on the existing data, which may include, but is not limited to, techniques such as perturbation, rotation, scaling, flipping, cropping, or any other type of transformation known in the art. In particular, augmenting the training data may involve perturbing the existing data by adding a small amount of noise to create new data points. Alternatively, augmenting training data may involve rotating or flipping images in a dataset used for training an image recognition model.

The inventor recognized that data augmentation can increase the diversity and amount of training data, which can help the model generalize better and reduce overfitting, leading to improved performance on unseen data. Furthermore, data augmentation is a cost-effective way to increase the size and diversity of the training data without the need for collecting new data, which can be expensive and time-consuming. Additionally, data augmentation can help the model learn features that are invariant to the transformations used in the augmentation process, leading to a better representation of the data.

The invention relates in a second aspect to a computer-implemented method, comprising the step of using a second neural network provided by a method according to an aspect of the invention for at least one of controlling a medical imaging apparatus and/or a laboratory apparatus, processing a medical image of a patient, digital audio enhancement, image enhancement and/or video enhancement, digital audio analysis, image analysis and/or video analysis, encrypting, decrypting and/or signing electronic communications, speech recognition, providing a medical diagnosis by an automated system processing physiological measurements, processing a medical image of a patient to segment and/or classify a structure within the medical image.

For the task of controlling a medical imaging apparatus and/or a laboratory apparatus, neural networks can be used to optimize and streamline imaging protocols by reducing the time spent acquiring image data, or it can be used to improve resolution and enhance image quality. In particular, one can use models such as a super-resolution convolutional neural network model, a denoising convolutional neural network model, or a perceptron neural network model in the medical imaging system.

For the task of digital audio, image and/or video enhancement, neural networks can be used to enhance the quality of digital audio, image, and video by reducing noise, improving resolution, and enhancing overall quality. In particular, one can use convolutional neural networks that can learn and understand the underlying patterns in the data.

For the task of digital audio, image and/or video analysis, neural networks can be used to analyze digital audio, image, and video data by identifying patterns, classifying data, and making predictions based on the learned patterns. In particular, one can use deep learning models that can learn complex representations of the data.

For the task of encrypting, decrypting and/or signing electronic communications, neural networks can be used to encrypt, decrypt, and sign electronic communications by learning the underlying patterns in the data and using these patterns to encode and decode the data. In particular, one can use recurrent neural networks that can learn sequences in the data.

For the task of speech recognition, neural networks can be used for speech recognition by converting spoken language into written text. In particular, one can use recurrent neural networks and long short-term memory (LSTM) networks that can learn the temporal dynamics of speech.

For the task of providing a medical diagnosis by an automated system processing physiological measurements, neural networks can be used to provide a medical diagnosis by processing physiological measurements and making predictions based on the learned patterns. In particular, one can use deep learning models that can learn complex representations of the data.

For the task of processing a medical image of a patient to segment and/or classify a structure within the medical mage, neural networks can be used to segment and classify structures within a medical image by learning the underlying patterns in the image data. In particular, one can use convolutional neural networks that can learn spatial hierarchies in the data.

The invention relates in a third aspect to providing a system comprising means for carrying out the method of one of the aspects of the invention.

The invention relates in a further aspect to a system for providing a trained second neural network comprising at least one processor, the processor being configured for:

- receiving a first neural network trained to map first input data to first output data,
- receiving the second neural network configured to map second input data to second output data, wherein the second input data has the same structure as the first input data,
- determining a joint neural network comprising a first part of the first neural network and a second part of the second neural network,
- receiving first training data and second training data,
- training the joint neural network based on the first training data,
- training the second neural network based on the second training data and a second loss function, wherein the second loss function comprises a layer loss function based on a comparison of values of a second layer of the second part in the second neural network and values of a corresponding layer in the trained joint neural network,
- providing (PROV) the second neural network.

The invention relates in a further aspect to a system for using a second neural network provided by a method according to an aspect of the invention for at least one of

- controlling a medical imaging apparatus and/or a laboratory apparatus,
- processing a medical image of a patient,
- digital audio enhancement, image enhancement and/or video enhancement,
- digital audio analysis, image analysis and/or video analysis,
- encrypting, decrypting and/or signing electronic communications,
- speech recognition,
- providing a medical diagnosis by an automated system processing physiological measurements,
- processing a medical image of a patient to segment and/or classify a structure within the medical image.

The invention relates in a fourth aspect to a computer program product comprising instructions which, when the program is executed by a computer, cause the computer to carry out the method of one of the aspects of the invention.

The invention relates in a fifth aspect to a computer-readable storage medium comprising instructions which, when executed by a computer, cause the computer to carry out the method of one of the aspects of the invention.

The realization of the invention or one of its aspects by a computer program product and/or a computer-readable medium has the advantage that already existing systems can be easily adapted by software updates in order to work as proposed by the invention.

The said computer program products can be, for example, a computer program or comprise another element apart from the computer program. This other element can be hardware, for example a memory device, on which the computer program is stored, a hardware key for using the computer program and the like, and/or software, for example a documentation or a software key for using the computer program.

The properties, features and advantages of this invention described above, as well as the manner they are achieved, become clearer and more understandable in the light of the following description and embodiments, which will be described in detail in the context of the drawings. This following description does not limit the invention on the contained embodiments. Same components or parts can be labeled with the same reference signs in different figures. In general, the figures are not for scale.

The numbering and/or order of method steps is intended to facilitate understanding and should not be construed, unless explicitly stated otherwise, or implicitly clear, to mean that the designated steps have to be performed according to the numbering of their reference signs and/or their order within the figures. In particular, several or even all of the method steps may be performed simultaneously, in an overlapping way or sequentially.

In the following:

Fig. 1      displays a first embodiment of a first neural network,
Fig. 2      displays a first embodiment of a second neural network,
Fix. 3      displays a first embodiment of a joint neural network,
Fig. 4      displays a first embodiment of the training of a second neural network based on the pre-trained joint neural network,
Fig. 5      displays a second embodiment of a first neural network,
Fig. 6      displays a second embodiment of a second neural network,
Fix. 7      displays a second embodiment of a joint neural network,
Fig. 8      displays a second embodiment of the training of a second neural network based on the pre-trained joint neural network,

Fig. 9 displays a flowchart of a first embodiment of a method for providing a trained second neural network,

Fig. 10 displays a flowchart of a second embodiment of a method for providing a trained second neural network,

Fig. 11 displays an embodiment of a providing system.

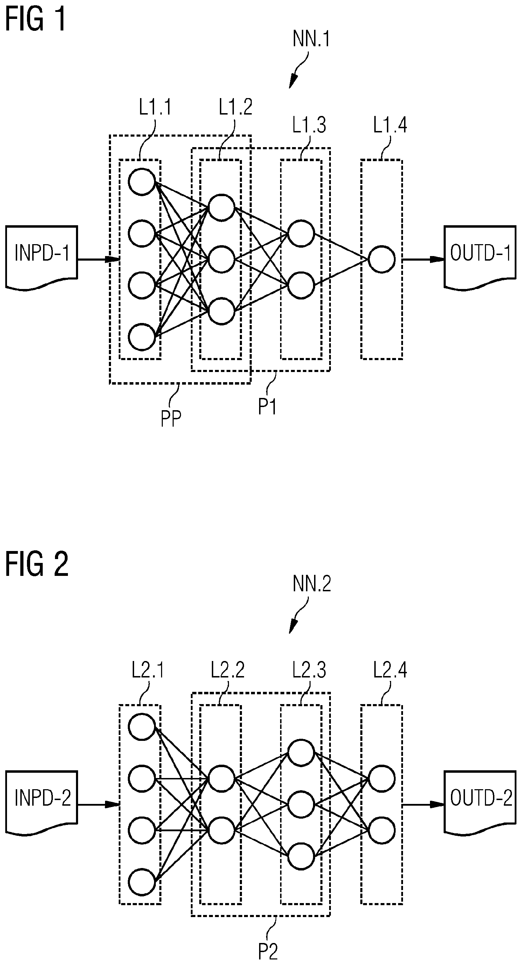

Fig. 1 displays an embodiment of a first neural network NN.1. The first neural network NN.1 takes first input data INPD.1 and is configured by training to map the first input data INPD.1 to first output data OUTD.1.

The first neural network NN.1 consists of four layers L1.1, ..., L1.4 (an input layer L1.1, an output layer L1.4 and two hidden layers L1.2, L1.3). In this embodiment, the four layers L1.1, ..., L1.4 are consecutive layers. Each of the layers L1.1, ..., L1.4 comprises at least one node. Nodes of consecutive layers L1.1, ..., L1.4 are connected by edges, and there is a weight (being a real number, preferably between -1 and 1) assigned to each of the edges. In this embodiment, between every pair of nodes in two consecutive layers there is an edge between these nodes (fully connected layers). Alternatively, it is also possible that there are only edges between selected pairs of nodes.

In this embodiment, the first input data INPD.1 is a four-dimensional vector of real numbers, and the first output data OUTD.1 is a real number (that can be interpreted as a one-dimensional vector of real numbers).

In the following, let $x_i^{(k)}$ denote the value of the i-th node in the k-th layer L1.1, ..., L1.4. In this notation, the first input data INPD.1 corresponds to the values $x_i^{(1)}$, and the first output data OUTD.1 corresponds to the values $x_i^{(4)}$. Values of a layer $x_j^{(k+1)}$ are calculated based on the values of the previous layer $x_i^{(k)}$ by $x_j^{(k+1)} = f^{(k+1)} (\sum_i V_{ij}^{(k,k+1)} x_i^{(k)})$, wherein $V_{ij}^{(k,k+1)}$ denotes the weight of the edge between node i in the k-th layer and node j in the (k+1)-th layer, and wherein $f^{(k+1)}: \mathbb{R} \to \mathbb{R}$ or $f^{(k+1)}: \mathbb{R} \to [0, 1]$ is an activation function (e.g., sigmoid, tanh, ReLU or SoftMax function). The values of the weights can be structured as a matrix, and the values of the nodes can be structured as a vector, so that the calculation is equivalent to $x^{(k+1)} = f^{(k+1)} (V^{(k,k+1)}x^{(k)})$, wherein the activation function is applied component-wise to its argument.

In this embodiment, the first neural network NN.1 comprises a first part P1, which consists of the hidden layers L1.2, L1.3 of the first neural network NN.1. Alternatively, the first part P1 can comprise other layers L1.1, ..., L1.4 of the first neural network NN.1, in particular, consecutive layers L1.1, ..., L1.4 of the first neural network NN.1. Furthermore, the first neural network NN.1 comprises a preprocessing part PP, which consists of the input layer L1.1 of the first neural network NN.1 and the first hidden layer L1.2 of the first neural network NN.1. In particular, the preprocessing part PP comprises consecutive layers L1.1, ..., L1.4 of the first neural network NN.1, and the last layer L1.2 of the preprocessing part PP equals the first layer L1.2 of the first part P1. However, the preprocessing part can also consist of other layers L1.1, ..., L1.4 of the first neural network NN.1.

Fig. 2 displays an embodiment of a second neural network NN.2. The second neural network NN.2 takes second input data INPD.2 and is configured to map the second input data INPD.2 to second output data OUTD.2.

The second neural network NN.2 consists of four layers L2.1, ..., L2.4 (an input layer L2.1, an output layer L2.4 and two hidden layers L2.2, L2.3). In this embodiment, the second neural network NN.2 comprises the same number of layers as the first neural network NN.1, however the second neural network NN.2 could also comprise more or less layers than the first neural network NN.1. In this embodiment, the four layers L2.1, ..., L2.4 of the second neural network NN.2 are consecutive layers. Each of the layers L2.1, ..., L2.4 comprises at least one node. Nodes of consecutive layers L2.1, ..., L2.4 are connected by edges, and there is a weight (being a real number, preferably between -1 and 1) assigned to each of the edges. In this embodiment, between every pair of nodes in two consecutive layers there is an edge between these nodes (fully connected layers). Alternatively, it is also possible that there are only edges between selected pairs of nodes.

In this embodiment, the first input data INPD.1 and the second input data INPD.2 have the same structure, both the first input data INPD.1 and the second input data INPD.2 are fourdimensional vectors. In particular, the input layer L1.1 of the first neural network NN.1 and the input layer L2.1 of the second neural network NN.2 comprise the same number of nodes.

In the following, let $y_i^{(k)}$ denote the value of the i-th node in the k-th layer L2.1, ..., L2.4. In this notation, the second input data INPD.2 corresponds to the values $y_i^{(1)}$, and the second output data OUTD.2 corresponds to the values $y_i^{(4)}$. Values of a layer $y_j^{(k+1)}$ are calculated based on the values of the previous layer $y_i^{(k)}$ by $y_j^{(k+1)} = f^{(k+1)} (\sum_i W_{ij}^{(k,k+1)} x_i^{(k)})$, wherein $W_{ij}^{(k,k+1)}$ denotes the weight of the edge between node i in the k-th layer and node j in the (k+1)-th layer, and wherein $f^{(k+1)}: \mathbb{R} \to \mathbb{R}$ or $f^{(k+1)}: \mathbb{R} \to [0, 1]$ is an activation function (e.g., sigmoid, tanh, ReLU or SoftMax function). The values of the weights can be structured as a matrix, and the values of the nodes can be structured as a vector, so that the calculation is equivalent to $y^{(k+1)} = f^{(k+1)} (W^{(k,k+1)}y^{(k)})$, wherein the activation function is applied component-wise to its argument.

In this embodiment, the second neural network NN.2 comprises a second part P2, which consists of the hidden layers L2.2, L2.3 of the second neural network NN.2. Alternatively, the second part P2 can comprise other layers L2.1, ..., L2.4 of the second neural network NN.2, in particular, consecutive layers L2.1, ..., L2.4 of the second neural network NN.2.

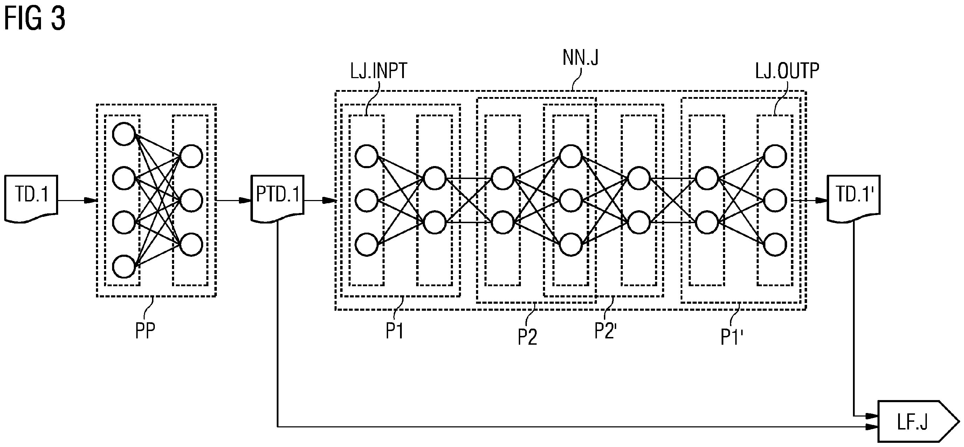

Fig. 3 displays an embodiment of a joint neural network NN.J. based on the first part P1 of the first neural network NN.1 as displayed in Fig. 1 and based on the second part P2 of the second neural network NN.2 as displayed in Fig. 2.

The joint neural network is constructed by concatenating the first part P1 and the second part P2. Furthermore, in this embodiment the joint neural network NN.J also comprises a mirrored first part P1' and a mirrored second part P2'. For the mirrored parts, the transposed weight matrices are used instead of the original weight matrices.

The joint neural network NN.J comprises an input layer LJ.INPT and an output layer LJ.OUTP, wherein the input layer LJ.INPT and the output layer LJ.OUTP comprise the same number of nodes (in the displayed example, both the input layer LJ.INPT and the output layer LJ.OUTP comprise three nodes).

In this embodiment, there is no additional layer between the first part P1 and the second part P2 within the joint neural network NN.J. The joint model is constructed so that all nodes of the last layer of the first part P1 are connected to all nodes of the first layer of the second part P2 (fully-connected layer), and the corresponding weights are initialized randomly. Alternatively, it is possible to include additional layers between the first part P1 and the second part P2, the additional weights can also be initialized randomly.

In this embodiment, the joint neural network NN.J comprises the second part P2 and a mirrored second part P2'. The weights of the mirrored second part P2 are initialized so that for the mirrored second part P2' the transposed weight matrix $W^T$ of the corresponding layers within the second part P2 is used. In this embodiment, the last layer of the second part P2 is equivalent to the first layer of the mirrored second part P2'. Alternatively, one could also use additional layers between the second part P2 and the mirrored second part P2', the additional weights between the additional layers can be initialized randomly.

In this embodiment, there is no additional layer between the mirrored second part P2' and the mirrored first part P1 within the joint neural network NN.J. The joint model is constructed so that all nodes of the last layer of the mirrored second part P2' are connected to all nodes of the first layer of the mirrored first part P1' (fully-connected layer), and the corresponding weights are initialized randomly. Alternatively, it is possible to include additional layers between the mirrored second part P2' and the mirrored first part P1', the additional weights can also be initialized randomly.

For adapting the weights of the joint neural network NN.J in training, first training data TD.1 is preprocessed by the preprocessing part PP of the first neural network NN.1, so that preprocessed training data PTD.1 is generated. The preprocessed training data PTD.1 is used as the input data for the joint neural network NN.J, so that output data TD.1' is generated. The preprocessed training data PTD.1 and the output data TD.1' have the same structure, for example, they can be vectors of the same dimension. The weights of the joint neural network NN.J are adapted based on a lost function LF.J, wherein the loss function LF.J is based on a comparison of the preprocessed training data PTD.1 and the output data TD.1. In this embodiment, the loss function is based on the residual sum of squares of the preprocessed training data PTD.1 and the output data TD.1. The adaption of the weights is based on the backpropagation algorithm.

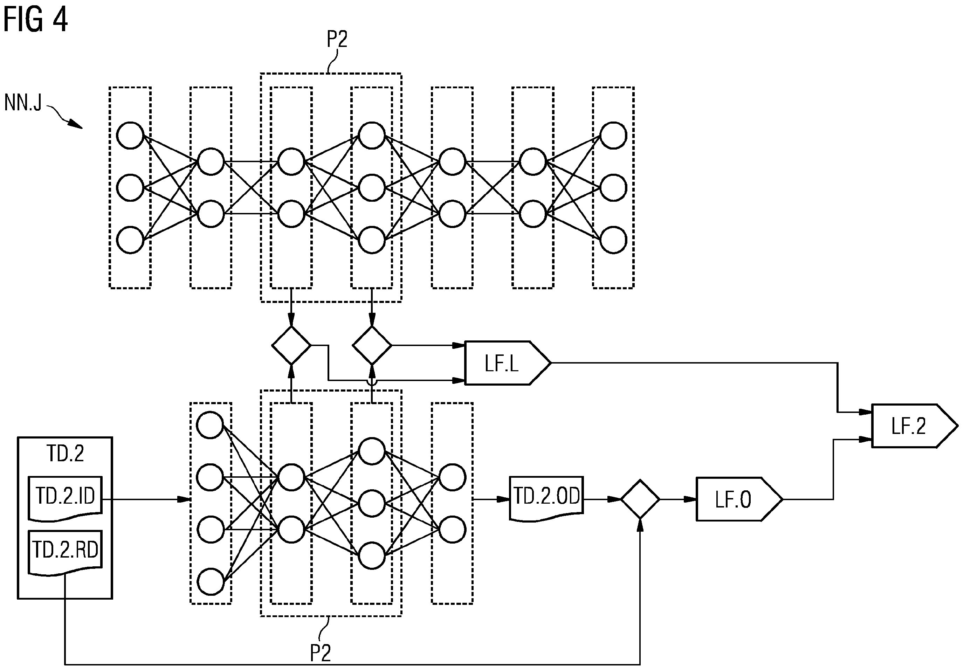

Fig. 4 displays the training of the second neural network NN.2 based on the pre-trained joint neural network NN.J. The second neural network NN.2 has the same structure as displayed in Fig. 2, and the joint neural network NN.J has the same structure as displayed in Fig. 3.

Before training the second neural network NN.2, the weights of the second part P2 within the second neural network NN.2 are copied from the respective part of the joint neural network NN.J, or initialized randomly.

Training of the second neural network NN.2 is based on second training data TD.2. In this embodiment, the second training data TD.2 comprises pairs of training input data TD.2.ID and training reference data TD.2.RD. Within the training process, the training input data TD.2.ID is used as input for the second neural network NN.2 in order to create training output data TD.2.OD. For adapting the weights of the second neural network NN.2 using the backpropagation algorithm a second loss function LF.2 is used.

In this embodiment, the second loss function LF.2 comprises an output loss function LF.O and a layer loss function LF.L. The output loss function LF.O is based on a comparison of the training reference data TD.2.RD and the training output data TD.2.OD. The layer loss function LF.L is based on a comparison of the values of the layers of the second part P2 within the second neural network NN.2 and the corresponding layers of the second part P2 within the joint neural network NN.J. In particular, the following term can be used for the second loss function LF.2:

$$L_2 \propto L_O(t_R, t_O) + \alpha \cdot \Sigma_{k \in P2} L_L(y^{(k)}, z^{(k)})$$

wherein $L_O$ denotes the output loss function LF.O, $t_R$ denotes the training reference data TD.2.RD, $t_O$ denotes the training output data TD.2.OD, $\alpha$ is a weighting factor, the sum runs over all layers in the second part P2, $L_L$ denotes the layer loss function LF.L, $y^{(k)}$ denotes the values of the k-th layer within the second neural network NN.2, and $z^{(k)}$ denotes the values of the corresponding layer within the joint neural network NN.J.

In this embodiment, the output loss function LF.O is based on a loss function is a residual sum of squares:

$$L_O(t_R, t_O) \propto \Sigma_i (t_{R,i} - t_{O,i})^2.$$

Instead of a residual sum of squares it is also possible to use other loss functions that measure the difference between the training reference data TD.2.RD and the training output data TD.2.OD.

In this embodiment, the layer loss function LF.L is a cosine similarity of the vector representing values of the respective layers:

$$L_L(y^{(k)}, z^{(k)}) \propto y^{(k)} \circ z^{(k)} / |y^{(k)}| \cdot |z^{(k)}|$$

In this formula, o denotes the scalar product of two vectors, and |·| denotes the length of a vector. Alternatively, other loss functions can be used. For example, one can use a L1 loss function:

$$L_L(y^{(k)}, z^{(k)}) \propto \Sigma_i |y_i^{(k)} - z_i^{(k)}|$$

Alternatively, one can use a L2 loss function (corresponding to the residual sum of squares):

$$L_L(y^{(k)}, z^{(k)}) \propto \Sigma_i (y_i^{(k)} - z_i^{(k)})^2$$

Alternatively, one can also use a combination of these loss functions and/or other similar loss functions.

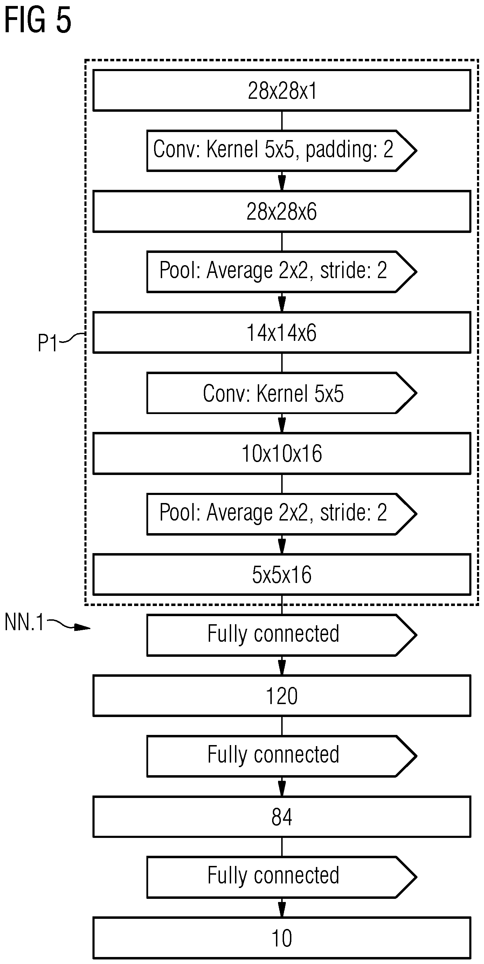

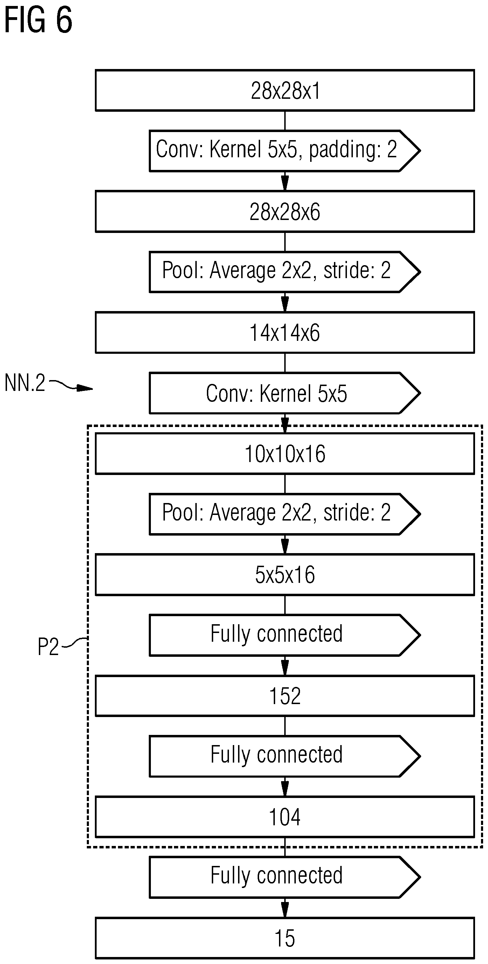

Fig. 5 displays a second embodiment of a first neural network NN.1 and Fig. 6 displays a second embodiment of a second neural network NN.2.

This embodiment of the first neural network NN.1 corresponds to a variant of the LeNet for processing 28x28 pixel image patches in order classify the input image into ten classes. The LeNet structure is disclosed, e.g., in the paper Y. Lecun et al. "Gradient-based learning applied to document recognition" (1998), Proc. IEEE. 86 (11) 2278-2324, doi: 10.1109/ 5.726791. The first neural network NN.1 comprises 8 consecutive layers (an input layer, an output layer and 6 hidden layers), indicated as rectangles in Fig. 5. The first and the second layer as well as the third and the fourth layer are connected by edges (indicated by five-sided arrows in Fig. 5) forming a convolution operation with kernel size 5x5 and padding 2 or no padding. The second and the third layer as well as the fourth and the fifth layer are connected by edges forming an average 22 pooling operation with stride 2. All other layers are fully connected.

In this embodiment, the second neural network NN.2 corresponds to another variant of the LeNet for processing 28x28 pixel images patches. In contrast to the first neural network NN.1, the second neural network NN.2 classifies into 15 different classes (for example, the second neural network NN.2 can recognize the 10 classes of the first neural network NN.1 and additional 5 classes not recognized by the first neural network NN.1). The structure of the second neural network NN.2 is similar to the structure of the first neural network NN.1, however, the size of the last three layers of the second neural network NN.2 is increased compared to the first neural network NN.1.

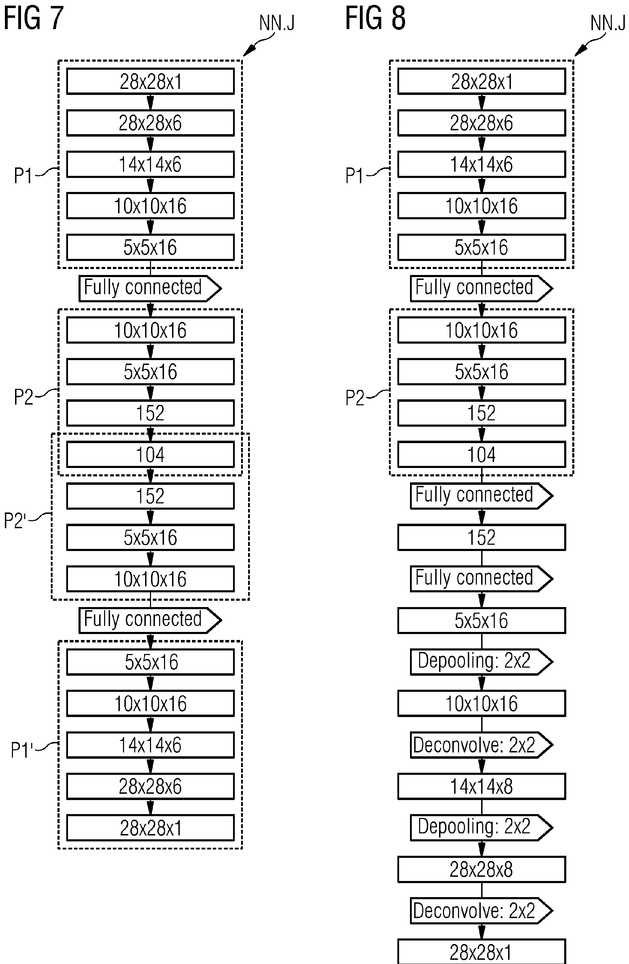

Fig. 7 displays a second embodiment of a joint neural network NN.J that is based on the first neural network NN.1 displayed in Fig. 5 and the second neural network NN.2 displayed in Fig. 6.

In this embodiment, the joint neural network NN.J comprises the first part P1 of the first neural network NN.J, the second part P2 of the second neural network NN.2, a mirrored second part P2 and a mirrored first part P1. The first part P1 and the second part P2, as well as the mirrored second part P2 and the mirrored first part P1 are connected via fully connected edges. However, it would also be possible to use less connections. Due to the fact that the first layer of the first neural network NN.1 and the first layer of the joint neural network NN.J are corresponding layers, training data suitable for the first neural network NN.1 can directly be used for the joint neural network NN.J without preprocessing.

The training of the joint neural network NN.J in this embodiment can be executed analogous to the embodiment displayed in Fig. 3, however in this embodiment the preprocessed training data PTD.1 equals the first training data TD.1. The training of the second neural network NN.J based on the pre-trained joint neural network NN.J in this embodiment can be executed analogous to the embodiment displayed in Fig. 4.

Fig. 8 displays a third embodiment of a joint neural network NN.J that is based on the first neural network NN.1 displayed in Fig. 5 and the second neural network NN.2 displayed in Fig. 6.

In this embodiment, the joint neural network NN.J comprises the first part P1 of the first neural network NN.J and the second part P2 of the second neural network NN.2. The first part P1 and the second part P2 are connected via fully connected edges. However, it would also be possible to use less connections. Due to the fact that the first layer of the first neural network NN.1 and the first layer of the joint neural network NN.J are corresponding layers, training data suitable for the first neural network NN.1 can directly be used for the joint neural network NN.J without preprocessing.

In this embodiment, the joint neural network NN.J comprises additional layers that are neither contained in the first neural network NN.1 nor in the second neural network NN.2. In particular, the joint neural network NN.J comprises depooling and deconvolutional layers for upsampling, so that the input layer and the output layer have the same size and structure.

The training of the joint neural network NN.J in this embodiment can be executed analogous to the embodiment displayed in Fig. 3, however in this embodiment the preprocessed training data PTD.1 equals the first training data TD.1. The training of the second neural network NN.J based on the pre-trained joint neural network NN.J in this embodiment can be executed analogous to the embodiment displayed in Fig. 4.

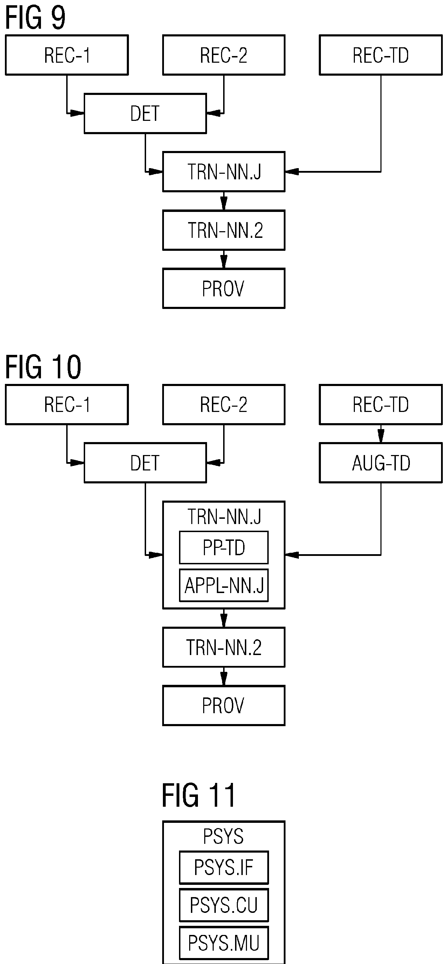

Fig. 9 displays a flowchart of a first embodiment of a method for providing a trained second neural network NN.2.

According to this embodiment, the method comprises the step of receiving REC-1 a first neural network NN.1 trained to map first input data INPD-1 to first output data OUTD-1. In this embodiment, the first neural network NN.1 has the structure as described with respect to Fig. 1, alternatively other first neural networks NN.1 can be used. The method furthermore comprises the step of receiving the second neural network NN.2 configured to map second input data INPD-2 to second output data OUTD-2. In this embodiment, the second neural network NN.2 has the structure as described with respect to Fig. 2, alternatively other second neural networks NN.2 can be used.

The second input data INPD-2 has the same structure as the first input data INPD-1. This implies that the second neural network NN.2 can process the same input data as the first neural network NN.1. It is possible that (compared with the first neural network NN.1) the second neural network NN.2 can process additional input data.

The method furthermore comprises the step of determining DET a joint neural network NN.J, wherein the joint neural network comprises a first part P1 of the first neural network NN.1 and a second part P2 of the second neural network NN.2. In this embodiment, the joint neural network NN.J has the structure as described with respect to Fig. 3, alternatively other joint neural networks NN.J can be used.

In this embodiment of the method the second part P2 comprises a plurality of consecutive second layers L2.1, ..., L2.M of the second neural network NN.2. Alternatively, the second part P2 could comprise only one layer of the second layers L2.1, ..., L2.M of the second neural network NN.2, or the second part P2 could comprise a plurality of non-consecutive second layers L2.1, ..., L2.M of the second neural network NN.2.

In this embodiment of the method the first part P1 comprises a plurality of consecutive first layers L1.1, ..., L1.N of the first neural network NN.1. Alternatively, the first part P1 could comprise only one layer of the first layers L1.1, ..., L1.N of the first neural network NN.1, or the first part P1 could comprise a plurality of non-consecutive first layers L1.1, ..., L1.N of the first neural network NN.1.

In this embodiment of the method the joint neural network NN.J comprises a mirrored second part P2' being a mirrored version of the second part P2. Furthermore, the last layer of the second part P2 and the first layer of the mirrored second part P2' are identical. Furthermore, the joint neural network NN.J comprises a mirrored first part P1' being a mirrored version of the first part P1. In the joint neural network NN.J the first part P1 is arranged before the second part P2, and the mirrored first part P1' is arranged after the mirrored second part P2'.

The method furthermore comprises the step of receiving REC-TD first training data TD.1 and second training data TD.2. In this embodiment, the second training data TD.2 comprises training input data TD.2.ID and associated training reference data TD.2.RD, preferably the second training data TD.2 comprises a plurality of pairs of training input data TD.2.ID and associated training reference data TD.2.RD. In particular, the training input data TD.2.ID has the same structure as the second input data INPD-2.

The method furthermore comprises the step of training TRN-NN.J the joint neural network NN.J based on the first training data TD.1. In this specific embodiment, the joint neural network NN.J comprises an input layer LJ.INPT and an output layer LJ.OUTP, and the input layer LJ.INPT of the joint neural network NN.J and the output layer LJ.OUTP of the joint neural network NN.J have equal size. Furthermore, training TRN-NN.J the joint neural network NN.J is based on the difference of input data of the joint neural network NN.J and the output of the joint neural network NN.J when applied to the input data, wherein the input data is based on the first training data TD.1. However, it is also possible to use other methods of training for the joint neural network NN.J based on the first training data TD.1.

The method furthermore comprises the step of training TRN-NN.2 the second neural network NN.2 based on the second training data TD.2 and a second loss function LF.2. The second loss function LF.2 comprises a layer loss function LF.L based on a comparison of values of a second layer L2.1, ..., L2.M of the second part P2 in the second neural network NN.2 and values of a corresponding layer in the trained joint neural network NN.J. The step of training TRN-NN.2 the second neural network NN-2 is explained in further detail with respect to Fig. 4.

The method furthermore comprises providing PROV the second neural network NN.2. Providing PROV the second neural network NN.2 can comprise at least one of storing, transmitting and displaying the second neural network NN.2.

In this embodiment, the steps of receiving REC-1 the first neural network NN.1 and receiving REC-2 the second neural network NN.2, as well as the step of receiving REC-TD the first training data TD.1 and second training data TD.2 are executed by an interface PSYS.IF of providing system PSYS. Furthermore, the steps of determining DET the joint neural network NN.J as well as training TRN-NN.J, TRN-NN.2 the joint neural network NN.J and the second neural network NN.2 are executed by a computation unit PSYS.CU of the providing system PSYS. Furthermore, the step of providing PROV the second neural network NN.2 is executed by the interface PSYS.IF of the providing system PSYS.

Fig. 10 displays a flowchart of a second embodiment of a method for providing a trained second neural network NN.2. This embodiment comprises all steps of the first embodiment of the method for providing a trained second neural network NN.2 described with respect to Fig. 9. These steps may have any of the advantageous further embodiments already disclosed with respect to Fig. 9.

The second embodiment furthermore comprises the step of augmenting AUG-TD the first training data TD.1 and/or the second training data TD.2. Augmenting AUG-TD the first training data TD.1 and/or the second training data TD.2 includes techniques such as perturbation, rotation, scaling, flipping, cropping, or any other type of transformation known in the art.

In the second embodiment, the step of training TRN-NN.J the joint neural network NN.J furthermore comprises the steps of preprocessing PP-TD the first training data TD.1 with a preprocessing part PP of the first neural network NN.1 and applying APPL-NN.J the joint neural network NN.J to input data comprising the preprocessed first training data PTD.1. In this embodiment, the preprocessing part PP and the first part P1 consist of consecutive first layers L1.1, ..., L1.N of the first neural network NN.1, and the last layer of the preprocessing part PP is the first layer of the first part P1. Alternatively, one can use other ways of preprocessing the first training data TD.1 and/or other structures of preprocessing parts PP of the first neural network NN.1.

Fig. 11 displays an embodiment of a providing system PSYS according to an embodiment of the invention. The providing system PSYS is configured for executing a method for providing a trained second neural network NN.2 according to embodiments of the invention.

The providing system PSYS can be or comprise a (personal) computer, a workstation, a virtual machine running on host hardware, a microcontroller, or an integrated circuit. As an alternative, the providing system PSYS can be a real or a virtual group of computers (the technical term for a real group of computers is "cluster", the technical term for a virtual group of computers is "cloud").

The providing system PSYS can comprise an interface PSYS.IF, a computation unit PSYS.CU and a memory unit PSYS.MU. An interface PSYS.IF can be a hardware interface or as a software interface (e.g. PCIBus, USB or Firewire). A computation unit PSYS.CU can comprise hardware elements and software elements, for example a microprocessor, a CPU (acronym for "central processing unit"), a GPU (acronym for "graphical processing unit"), a field programmable gate array (an acronym is "FPGA") or an ASIC (acronym for "application-specific integrated circuit"). A computation unit PSYS.CU can be configured for multithreading, i.e., the computation unit can host different computation processes at the same time, executing the either in parallel or switching between active and passive computation processes. Each of the interface PSYS.IF, the computation unit PSYS.CU and the memory unit PSYS.MU can comprise several subunits which are configured to executed different tasks and/or which are spatially separated.

The providing system PSYS can be connected to a database via a network NET. In particular, the database can store the first training data TD.1 and/or the second training data TD.2. The network can be realized as a LAN (acronym for "local area network"), in particular a WiFi network, or any other local connection. Alternatively, the network can be the internet. In particular, the network could be realized as a VPN (acronym for "virtual private network"). Alternatively, the database can also be integrated into the providing system PSYS, e.g., the database could be stored within the memory unit PSYS.MU of the providing system PSYS. In this case the database is connected with an internal connection.

Wherever not already described explicitly, individual embodiments, or their individual aspects and features, can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

Independent of the grammatical term usage, individuals with male, female or other gender identities are included within the term.

## Claims

1. A computer-implemented method for providing a trained second neural network (NN.2) comprising:

   - receiving (REC-1) a first neural network (NN.1) trained to map first input data (INPD-1) to first output data (OUTD-1),
   - receiving (REC-2) the second neural network (NN.2) configured to map second input data (INPD-2) to second output data (OUTD-2),
   wherein the second input data (INPD-2) has the same structure as the first input data (INPD-1),
   - determining (DET) a joint neural network (NN.J) comprising a first part (P1) of the first neural network (NN.1) and a second part (P2) of the second neural network (NN.2),
   - receiving (REC-TD) first training data (TD.1) and second training data (TD.2),
   - training (TRN-NN.J) the joint neural network (NN.J) based on the first training data (TD.1),
   - training (TRN-NN.2) the second neural network (NN.2) based on the second training data (TD.2) and a second loss function (LF.2),
wherein the second loss function (LF.2) comprises a layer loss function (LF.L) based on a comparison of values of a second layer (L2.1, ..., L2.M) of the second part (P2) in the second neural network (NN.2) and values of a corresponding layer in the trained joint neural network (NN.J),
- providing (PROV) the second neural network (NN.2).

2. The method according to claim 1, wherein the second part (P2) comprises a plurality of consecutive second layers (L2.1, ..., L2.M) of the second neural network (NN.2).

3. The method according to claim 2, wherein the joint neural network (NN.J) comprises a mirrored second part (P2') being a mirrored version of the second part (P2), wherein the last layer of the second part (P2) and the first layer of the mirrored second part (P2') are identical.

4. The method according to claim 3, wherein the first part (P1) comprises a plurality of consecutive first layers (L1.1, ..., L1.N) of the first neural network (NN.1),

wherein the joint neural network (NN.J) comprises a mirrored first part (P1') being a mirrored version of the first part (P1),
wherein in the joint neural network (NN.J) the first part (P1) is arranged before the second part (P2), and wherein the mirrored first part (P1') is arranged after the mirrored second part (P2').

5. The method according to one of the preceding claims, wherein the layer loss function (LF.L) is based on cosine similarity, L1 loss and/or L2 loss of the second layer (L2.1, ..., L2.M) of the second part (P2) in the second neural network (NN.2) and the corresponding layer in the trained joint neural network (NN.J).

6. The method according to one of the preceding claims, wherein the second training data (TD.2) comprises training input data (TD.2.ID) and associated training reference data (TD.2.RD), wherein the second loss function (LF.2) comprises an output loss function (LF.O) based on the comparison of the result of applying the second neural network (NN.2) to the training input data (TD.2.ID) and the associated training reference data (TD.2.RD).

7. The method according to one of the preceding claims, wherein the joint neural network (NN.J) comprises an input layer (LJ.INPT) and an output layer (LJ.OUTP), wherein the input layer (LJ.INPT) of the joint neural network (NN.J) and the output layer (LJ.OUTP) of the joint neural network (NN.J) have equal size.

8. The method according to claim 7, wherein training (TRN-NN.J) the joint neural network (NN.J) is based on the difference of input data of the joint neural network (NN.J) and the output of the joint neural network (NN.J) when applied to the input data, wherein the input data is based on the first training data (TD.1).

9. The method according to one of the preceding claims, wherein training (TRN-NN.J) the joint neural network (NN.J) comprises

-- preprocessing (PP-TD) the first training data (TD.1) with a preprocessing part (PP) of the first neural network (NN.1),
-- applying (APPL-NN.J) the joint neural network (NN.J) to input data comprising the preprocessed first training data (PTD.1).

10. The method according to claim 9, wherein the preprocessing part (PP) and the first part (P1) consist of consecutive first layers (L1.1, ..., L1.N) of the first neural network (NN.1),
wherein the last layer of the preprocessing part (PP) is the first layer of the first part (P1).

11. The method according to one of the preceding claims, furthermore comprising:

- augmenting (AUG-TD) the first training data (TD.1) and/or the second training data (TD.2).

12. A computer-implemented method comprising using a second neural network (NN.2) provided by a method according to any of the claims 1 to 11 for at least one of

- controlling a medical imaging apparatus and/or a laboratory apparatus,

- processing a medical image of a patient,
- digital audio enhancement, image enhancement and/or video enhancement,
- digital audio analysis, image analysis and/or video analysis,
- encrypting, decrypting and/or signing electronic communications,
- speech recognition,
- providing a medical diagnosis by an automated system processing physiological measurements,
- processing a medical image of a patient to segment and/or classify a structure within the medical image.

13. A providing system comprising means for carrying out the method of one of the claims 1 to 12.

14. A computer program product comprising instructions which, when the program is executed by a computer, cause the computer to carry out the method of one of the claims 1 to 12.

15. A computer-readable storage medium comprising instructions which, when executed by a computer, cause the computer to carry out the method of one of the claims 1 to 12.

FIG 1

NN.1

L1.1   L1.2   L1.3   L1.4

INPD-1 → OUTD-1

PP   P1

FIG 2

NN.2

L2.1   L2.2   L2.3   L2.4

INPD-2 → OUTD-2

P2

FIG 3

FIG 4

# FIG 5

```
┌─────────────────────────────────┐
│          28x28x1                │
└─────────────────────────────────┘
        Conv: Kernel 5x5, padding: 2
┌─────────────────────────────────┐
│          28x28x6                │
└─────────────────────────────────┘
        Pool: Average 2x2, stride: 2
┌─────────────────────────────────┐
│          14x14x6                │
└─────────────────────────────────┘
        Conv: Kernel 5x5
┌─────────────────────────────────┐
│          10x10x16               │
└─────────────────────────────────┘
        Pool: Average 2x2, stride: 2
┌─────────────────────────────────┐
│          5x5x16                 │
└─────────────────────────────────┘
```

P1

NN.1

Fully connected

120

Fully connected

84

Fully connected

10

# FIG 6

```
┌─────────────────────────────────────┐
│              28x28x1                 │
└─────────────────────────────────────┘
                  │
       ┌──────────▼──────────────────┐
       │ Conv: Kernel 5x5, padding: 2 ╲
       └──────────────────────────────╲
                  │
┌─────────────────────────────────────┐
│              28x28x6                 │
└─────────────────────────────────────┘
                  │
       ┌──────────▼──────────────────┐
       │ Pool: Average 2x2, stride: 2 ╲
       └──────────────────────────────╲
                  │
┌─────────────────────────────────────┐
│              14x14x6                 │
└─────────────────────────────────────┘
                  │
NN.2 ┌────────────▼────────┐
  →  │   Conv: Kernel 5x5   ╲
     └──────────────────────╲
                  │
┌─────────────────────────────────────┐
│              10x10x16                │
└─────────────────────────────────────┘
                  │
       ┌──────────▼──────────────────┐
       │ Pool: Average 2x2, stride: 2 ╲
       └──────────────────────────────╲
                  │
┌─────────────────────────────────────┐
│               5x5x16                 │
└─────────────────────────────────────┘
                  │
       ┌──────────▼──────────┐
  P2   │   Fully connected    ╲
       └──────────────────────╲
                  │
┌─────────────────────────────────────┐
│                152                   │
└─────────────────────────────────────┘
                  │
       ┌──────────▼──────────┐
       │   Fully connected    ╲
       └──────────────────────╲
                  │
┌─────────────────────────────────────┐
│                104                   │
└─────────────────────────────────────┘
                  │
       ┌──────────▼──────────┐
       │   Fully connected    ╲
       └──────────────────────╲
                  │
┌─────────────────────────────────────┐
│                15                    │
└─────────────────────────────────────┘
```

## FIG 7

NN.J

P1
- 28x28x1
- 28x28x6
- 14x14x6
- 10x10x16
- 5x5x16

Fully connected

P2
- 10x10x16
- 5x5x16
- 152

P2'
- 104
- 152
- 5x5x16
- 10x10x16

Fully connected

P1'
- 5x5x16
- 10x10x16
- 14x14x6
- 28x28x6
- 28x28x1

## FIG 8

NN.J

P1
- 28x28x1
- 28x28x6
- 14x14x6
- 10x10x16
- 5x5x16

Fully connected

P2
- 10x10x16
- 5x5x16
- 152
- 104

Fully connected

- 152

Fully connected

- 5x5x16

Depooling: 2x2

- 10x10x16

Deconvolve: 2x2

- 14x14x8

Depooling: 2x2

- 28x28x8

Deconvolve: 2x2

- 28x28x1

## FIG 9

```
┌─────────┐   ┌─────────┐   ┌─────────┐
│  REC-1  │   │  REC-2  │   │ REC-TD  │
└────┬────┘   └────┬────┘   └────┬────┘
     │    ┌────────┴──┐          │
     └───►│    DET    │◄─┘       │
          └─────┬─────┘          │
                │   ┌──────────┐ │
                └──►│ TRN-NN.J │◄┘
                    └────┬─────┘
                    ┌────▼─────┐
                    │ TRN-NN.2 │
                    └────┬─────┘
                    ┌────▼─────┐
                    │   PROV   │
                    └──────────┘
```

## FIG 10

```
┌─────────┐   ┌─────────┐   ┌─────────┐
│  REC-1  │   │  REC-2  │   │ REC-TD  │
└────┬────┘   └────┬────┘   └────┬────┘
     │    ┌────────┴──┐     ┌────▼────┐
     └───►│    DET    │◄─┘  │ AUG-TD  │
          └─────┬─────┘     └────┬────┘
                │   ┌──────────┐ │
                │   │ TRN-NN.J │ │
                │   │ ┌──────┐ │ │
                └──►│ │ PP-TD│◄┘
                    │ └──────┘ │
                    │┌────────┐│
                    ││APPL-NN.J││
                    │└────────┘│
                    └────┬─────┘
                    ┌────▼─────┐
                    │ TRN-NN.2 │
                    └────┬─────┘
                    ┌────▼─────┐
                    │   PROV   │
                    └──────────┘
```

## FIG 11

```
┌──────────────┐
│    PSYS      │
│ ┌──────────┐ │
│ │ PSYS.IF  │ │
│ └──────────┘ │
│ ┌──────────┐ │
│ │ PSYS.CU  │ │
│ └──────────┘ │
│ ┌──────────┐ │
│ │ PSYS.MU  │ │
│ └──────────┘ │
└──────────────┘
```

Europäisches
Patentamt

European
Patent Office

Office européen
des brevets

# EUROPEAN SEARCH REPORT

**Application Number**

EP 24 15 4149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/234365 A1 (ADVANCED RISC MACH LTD [GB]) 25 November 2021 (2021-11-25)<br>* pages 3-13 - page 3; claims 13-15 *<br>----- | 1-15 | INV.<br>G06N3/045<br>G06N3/096<br>G06N3/0455 |
| A | TANG ZHI ET AL: "A semi-supervised transferable LSTM with feature evaluation for fault diagnosis of rotating machinery",<br>APPLIED INTELLIGENCE, KLUWER ACADEMIC PUBLISHERS, DORDRECHT, NL,<br>vol. 52, no. 2, 27 May 2021 (2021-05-27), pages 1703-1717, XP037673621,<br>ISSN: 0924-669X, DOI: 10.1007/S10489-021-02504-1<br>[retrieved on 2021-05-27]<br>* the whole document *<br>----- | 1-15 | |
| A | WO 2022/185179 A1 (GLAXOSMITHKLINE BIOLOGICALS SA [BE])<br>9 September 2022 (2022-09-09)<br>* the whole document *<br>----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 20 June 2024 | Manfrin, Max |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 4149

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | Publication date | Patent family member(s) | | Publication date |
|---|---|---|---|---|
| WO 2021234365 A1 | 25-11-2021 | GB | 2595236 A | 24-11-2021 |
| | | US | 2023073669 A1 | 09-03-2023 |
| | | WO | 2021234365 A1 | 25-11-2021 |
| WO 2022185179 A1 | 09-09-2022 | EP | 4302300 A1 | 10-01-2024 |
| | | US | 2024153590 A1 | 09-05-2024 |
| | | WO | 2022185179 A1 | 09-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. LECUN et al.** Gradient-based learning applied to document recognition. *Proc. IEEE.*, 1998, vol. 86 (11), 2278-2324